# EUROPÄISCHE PATENTSCHRIFT

(11) **EP 0 483 502 B1**
(45) Veröffentlichungstag und Bekanntmachung des Hinweises auf die Patenterteilung: **22.11.1995**
(21) Anmeldenummer: 91115907.7
(22) Anmeldetag: 19.09.1991
(51) Int. Cl.: C08G 65/40, C07D 277/66

(54) **Hochtemperaturbeständige, benzthiazolhaltige Polyarylether**
High temperature resistant benzothiazol-groups containing polyarylether
Polyaryléther contenant des groupes benzothioliques et résistant à haute température

(30) Priorität: 27.09.1990 DE 4030511
(43) Veröffentlichungstag der Anmeldung: 06.05.1992
(73) Patentinhaber: BASF Aktiengesellschaft, 67063 Ludwigshafen (DE)
(72) Erfinder: Wolf, Peter, Dr., W-6710 Frankenthal (DE); Heinz, Gerhard, Dr., W-6719 Weisenheim (DE)

(56) Entgegenhaltungen:
- EP-A- 0 178 185
- EP-A- 0 368 006
- FR-A- 1 301 158
- FR-A- 2 067 512

## Beschreibung

Die Erfindung betrifft lösliche und/oder schmelzbare benzthiazolhaltige Polyarylether sowie verfahren zu deren Herstellung.

Polybenzthiazole sind hoch temperaturbeständige Polymere, die auch chemisch äußerst stabil sind; die starre Struktur der vollaromatischen Polybenzthiazole führt zu ausgezeichneten mechanischen Eigenschaften. Da Polybenzthiazole meist hochkristallin sind, liegen Schmelz- bzw. Erweichungspunkte meist oberhalb der jeweiligen Zersetzungstemperatur. Die Folge ist eine hohe Wärmeformbeständigkeit, aber verbunden mit dem Nachteil, daß die Verarbeitung aus der Schmelze bislang nicht möglich ist.

So ist z.B. die Herstellung von Formkörpern aus Polybenzthiazolen mit Hilfe konventioneller Verarbeitungstechniken bisher nicht möglich; statt dessen werden aufwendige Sinterprozesse benötigt, beschränkt auf wenige Anwendungsgebiete.

Polyarylether besitzen eine geringere Thermostabilität als Polybenzthiazole, sind jedoch aufgrund ihrer thermoplastischen Verformbarkeit wesentlich leichter zu verarbeiten. Ein Nachteil der vollaromatischen Polyarylether besteht in ihrer relativ geringen Wärmeformbeständigkeit (gemessen z.B. nach ASTM D 648).

Eine Aufgabe ist daher die Schaffung neuer hochtemperaturbeständiger Kunststoffe, die eine Kombination der hohen Wärmeformbeständigkeit von Polybenzthiazolen mit der leichten Verarbeitbarkeit von Polyarylethern bieten.

Eine spezielle Aufgabe der Erfindung ist es, benzthiazolhaltige Polyarylether zu schaffen, die thermisch hoch belastbar und schmelzbar sind und mit Hilfe konventioneller Verfahren verarbeitet werden können.

Die Aufgabe wird gelöst durch neue polymere Verbindungen, die als Kettenbausteine sowohl solche von Benzthiazol als auch solche von Arylethern enthalten, die jeweils durch flexible Kettenelemente miteinander verbunden sind.

Benzthiazolhaltige Polyarylether wurden bereits von A. Bouanane et al. (DE 21 38 830 v. 02.03.1972) beschrieben. Das von Bouanane et al. angegebene Verfahren besitzt jedoch einige Nachteile. So liefert das in DE 21 38 830 beschriebene Verfahren ausschließlich Polymere, die Iminokohlensäurethioester-Strukturen enthalten, welche die thermische und die hydrolytische Stabilität der genannten Verbindungen beeinträchtigen können. Auch sind die nach DE 21 38 830 gewonnenen Materialien nicht thermoplastisch verformbar, so daß insoweit keine Verbesserung gegenüber Polybenzthiazolen erzielt wird.

Unmittelbarer Erfindungsgegenstand sind lösliche und/oder schmelzbare benzthiazolhaltige Polyarylether mit einer Glasübergangstemperatur oberhalb von 150°C und einer Schmelztemperatur von bis zu 450°C, aufgebaut im wesentlichen aus wiederkehrenden Einheiten der allgemeinen Formel I 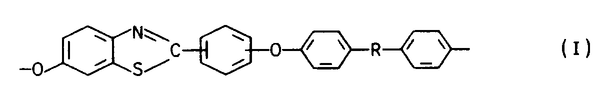
deren Kerne substituiert sein können durch C₁-C₆-Alkyl, C₁-C₆-Alkoxy, Aryl oder Halogen und wobei R steht für
-CO- ; -SO₂- ;

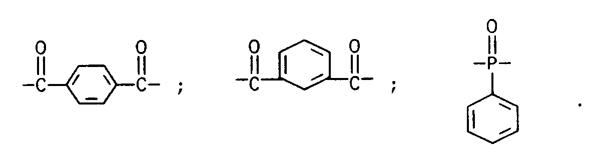

In der vorstehenden Formel I können die Benzthiazolreste teilweise ersetzt sein, so daß sich Polymere ergeben, die neben Einheiten der Struktur I bis zu 99 mol-% Einheiten der Struktur II aufweisen 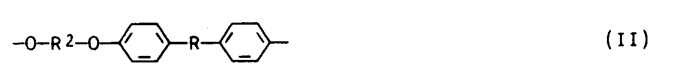
wobei R² eine der nachstehend aufgeführten Einheiten bedeutet 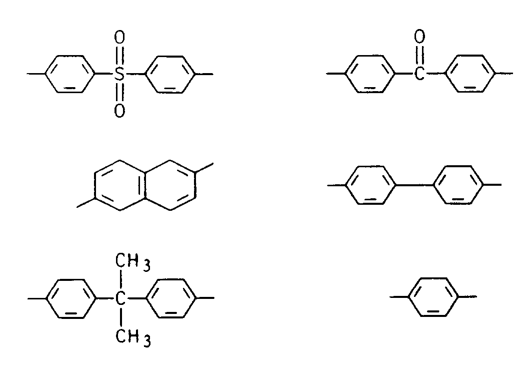
Die Erfindung betrifft außerdem die Herstellung neuer Monomerer, die als Ausgangsmaterialien für die beschriebenen Polyarylether eingesetzt werden können; diese haben die Struktur VI, d.h. entweder die Struktur VIa oder VIb, u.U. auch eine stellungsisomere Struktur mit ortho-Stellung der Hydroxylgruppe am freien Phenyl (VIc) 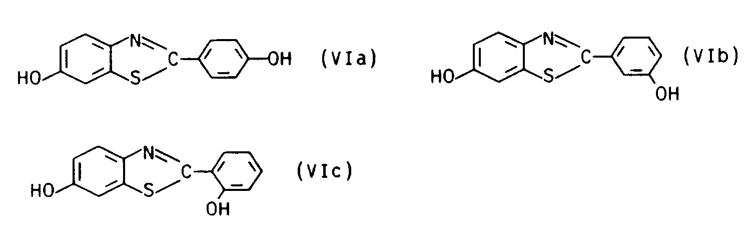
Die neuen Polymeren erhält man vorteilhaft durch nukleophile aromatische Funktionalisierung der neuen benzthiazolhaltigen Bisphenole VI mit aktivierten aromatischen Dihalogeniden oder aromatischen Dinitroverbindungen.

Die Polymerisation wird in einem polaren aprotischen Lösungsmittel wie N,N-Dimethylformamid (DMF), N,N-Dimethylacetamid (DMA), N-Methylpyrrolidon (NMP), N-Methylcaprolactam, Dimethylsulfoxid (DMSO), Sulfolan oder Diphenylsulfon in Gegenwart einer Base wie Alkali- oder Erdalkalimetallcarbonat bei einer Temperatur zwischen etwa 140 und 320°C durchgeführt, die von den Reaktionsteilnehmern und dem gewählten Lösungsmittel abhängt.

Der Feststoffgehalt der Lösungen beträgt dabei i.a. 10 bis 50 %. Die Reaktionsdauer richtet sich nach gewünschtem Kondensationsgrad sowie nach der Reaktivität der eingesetzten Monomeren, liegt aber im allgemeinen zwischen 0,5 und 15 Stunden. Im Anschluß an die Polykondensation können zur Stabilisierung etwa vorhande freie Phenolat-Endgruppen mit einem Arylierungs- oder Alkylierungsmittel, wie z.B. Methylchlorid umgesetzt werden, bei einer Temperatur von 50 bis 300°C, vorzugsweise 150 bis 250°C.

Die Umsetzung wird i.a. unter einem Inertgas, wie Stickstoff oder Argon durchgeführt.

Das aus der Base während der Polykondensation gebildete Salz kann in üblicher Weise entfernt werden. Durch den teilweisen Ersatz des benzthiazolhaltigen Bisphenols durch benzthiazolfreie Bisphenole, d.h. Einbau der o.g. Einheiten II können Copolymere erhalten werden, deren Eigenschaften auf die jeweiligen Anfordernisse, z.B. bezüglich Glastemperatur oder Kristallinität, durch Variation des Dihydroxybenzthiazol-Anteils zwischen 1 und 100 % zugeschnitten werden können. Das erfindungsgemäße Verfahren erlaubt, aufgrund der Vielzahl der zur Verfügung stehenden aktivierten aromatischen Dihalogenide und aromatischen Dinitroverbindungen die einfache Einführung von Strukturvariationen in die Polymerkette.

### Herstellung der benzthiazolhaltigen Bisphenole

### 1) Herstellung von 2-(p-Hydroxyphenyl)-6-hydroxy-benzthiazol

### a) Herstellung von Bis-(6-methoxy-2-amino-thiophenolato)-zinkat

Die Herstellung von Bis-(6-methoxy-2-amino-thiophenolato)-zinkat ist bekannt, nämlich aus 2-Amino-6-methoxybenzthiazol durch Hydrolyse in wäßriger KOH und Umsetzung mit Zinkchlorid.

### b) Herstellung von 2-(p-Methoxyphenyl)-6-methoxy-benzthiazol

25 g Bis-(6-methoxy-2-aminothiophenolatozinkat) werden unter Stickstoff in 250 ml trockenem DMA gelöst. Man kühlt auf 0 bis 5°C und tropft eine Lösung von 23 g p-Methoxybenzoylchlorid in 100 ml trockenem DMA zu. Die Lösung wird 1 Stunde bei Raumtemperatur gerührt und anschließend drei Stunden auf 140°C erhitzt. Nach dem Abkühlen gießt man in 1 l Eiswasser, filtriert und wäscht mit 1-n Natriumcarbonatlösung und Wasser pH-neutral und trocknet i.V. bei 80°C. Die Ausbeute an 2-(p-Methoxyphenyl)-6-methoxy-benzthiazol beträgt 33,6 g (93 % der berechneten); Schmelzpunkt 162-164°C.

| Elementaranalyse: | C | H | O | N | S |
|---|---|---|---|---|---|
| gefunden [%]: | 66,4 | 4,7 | 11,9 | 5,2 | 11,9 |
| berechnet [%]: | 66,40 | 4,83 | 11,79 | 5,16 | 11,82 |

### c) Herstellung von 2-(p-Hydroxyphenyl)-6-hydroxy-benzothiazol

20 g 2-(p-Methoxyphenyl)-6-methoxy-benzthiazol werden in einer Mischung aus 100 ml Eisessig und 200 ml konz. wäßriger HBr unter Rühren zum Rückfluß erhitzt. Nach 14 Stunden läßt man auf Raumtemperatur abkühlen, saugt ab, wäscht mit Wasser und kristallisiert aus Ethanol um. Die Ausbeute beträgt 17,2 g (95 % d. erwarteten); Schmelzpunkt: 284-286°C.

| Elementaranalyse: | C | H | O | N | S |
|---|---|---|---|---|---|
| gefunden [%]: | 64,1 | 3,7 | 13,3 | 5,8 | 13,3 |
| berechnet [%]: | 64,18 | 3,73 | 13,15 | 5,76 | 13,18 |

### d) Herstellung von 2-(m-Methoxyphenyl)-6-methoxy-benzthiazol

Nach dem gleichen Verfahren wie für 2-(p-Methoxyphenyl)-6-methoxy-benzthiazol beschrieben läßt sich das entsprechende meta-Isomere durch Ersatz von p-Methoxybenzoylchlorid durch m-Methoxybenzoylchlorid gewinnen. Ausbeute: 91 %; Schmelzpunkt: 155-157°C

### e) Herstellung von 2-(m-Hydroxyphenyl)-6-hydroxy-benzothiazol

Die Verbindung wird durch Dealkylierung von 2-(m-Methoxyphenyl)-6-methoxy-benzthiazol nach dem in c) beschriebenen Verfahren erhalten. Ausbeute: 93 %; Schmelzpunkt: 280-282°C

| Elementaranalyse: | C | H | O | N | S |
|---|---|---|---|---|---|
| gefunden [%]: | 64,1 | 3,8 | 13,2 | 5,9 | 13,1 |
| berechnet [%]: | 64,18 | 3,73 | 13,15 | 5,76 | 13,18 |

### Herstellung der Poly(arylether-benzthiazole)

Die angegebene reduzierte Viskosität (ηₛₚ/C) wurde in 0,5 %iger Lösung in Schwefelsäure bei 25°C bestimmt.

### Beispiel 1

### Polykondensation von 2-Hydroxyphenyl-6-hydroxybenzthiazol mit 4,4'-Difluorbenzophenon

24,33 g (0,1 mol) 2-Hydroxyphenyl-6-hydroxy-benzthiazol werden unter Stickstoff in 300 g geschmolzenem Diphenylsulfon suspendiert und mit 29 g wasserfreiem Kaliumcarbonat versetzt. Man rührt 30 Minuten bei 180°C und setzt dann 21,82 g (0,1 mol) 4,4'-Difluorbenzophenon zu. Die Tempeatur wird für eine Stunde auf 250°C erhöht, dann erhitzt man eine weitere Stunde auf 280°C und schließlich noch eine Stunde auf 310°C. Man gießt auf eine Metalloberfläche, wo das Reaktionsgemisch erstarrt und zerkleinert. Man extrahiert zur Entfernung des Diphenylsulfons mit Aceton, verrührt anschließend mit einer Mischung aus 500 ml Methanol und 50 ml Eisessig, filtriert und trocknet im Vakuum bei 150°C. Man erhält 40,6 g (96 %) Polymer der Struktur I, 1 als farblosen Feststoff und mit einer reduzierten Viskosität von 85 ml/g. Das Polymer besitzt eine Glastemperatur (T_{g}) von 195°C und eine Schmelztemperatur von 391°C.

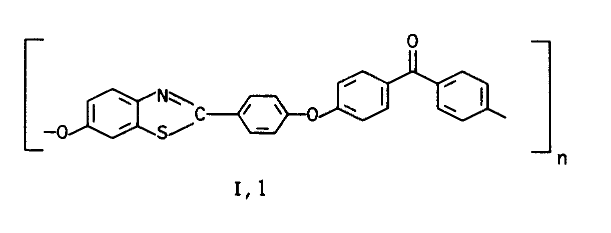

### Beispiel 2

### Polykondensation von 2-hydroxyphenyl-6-hydroxybenzthiazol mit 4,4'-Dichlordiphenylsulfon

Man setzt nach dem in Beispiel 1 geschilderten Verfahren 24,33 g (0,1 mol) 2-Hydroxyphenyl-6-hydroxy-benzthiazol mit 29 g wasserfreiem Kaliumcarbonat und 28,72 g (0,1 mol) 4,4'-Dichlordiphenylsulfon um und erhält 46,0 g (98 %) Polymer der Struktur I,2 als farblosen Feststoff mit einer reduzierten Viskosität von 67 ml/g und einer Glastemperatur (T_{g}) von 244°C.

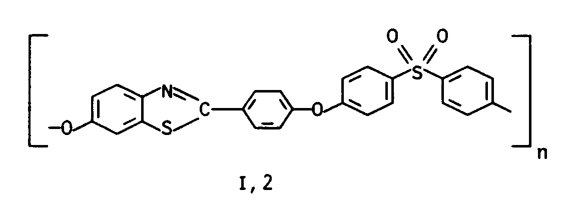

### Beispiele 3 bis 5

Nach dem in. Beispiel 1 beschriebenen Verfahren werden 24,33 g (0,1 mol) 2-Hydroxyphenyl-6-hydroxy-benzthiazol mit jeweils 0,1 mol der folgenden Halogenverbindungen zur Reaktion gebracht:

| Beispiel | Halogenverbindung | T_{g} [°C] | Tₘ [°C%] | η_{red} [ml/g] |
|---|---|---|---|---|
| 3 | 1,3-Bis(p-fluorbenzoylbenzol) | 194 | 389 | 77 |
| 4 | 1,4-Bis(p-fluorbenzoylbenzol) | 189 | 341/407* | 88 |
| 5 | 4,4'-Difluortriphenylphosphinoxid | 253 | - | 61 |

| | | | | |
|---|---|---|---|---|
| * Produkt zeigt 2 Schmelzpunkte | | | | |

### Beispiel 6

### Co-Polykondensation von 2-Hydroxyphenyl-6-hydroxybenzthiazol mit 4,4',-Difluorbenzophenon und Bisphenol-A

12,164 g (0,05 mol) 2-Hydroxyphenyl-6-hydroxy-benzthiazol, 11,415 g (0,05 mol) Bisphenol-A und 29 g wasserfreies Kaliumcarbonat werden in einer Mischung aus 120 ml N-Methylpyrrolidon und 50 ml Toluol an einem Wasserabscheider unter Stickstoff bei 140°C 30 Minuten gerührt. Man setzt 22,252 g (0,102 mol) 4,4-Difluorbenzophenon zu und rührt weitere 4 Stunden bei 140°C. Anschließend wird Toluol abdestilliert, bis die Innentemperatur im Reaktiongefäß 160°C beträgt. Bei dieser Temperatur wird noch 6 Stunden gerührt. Nach dem Erkalten läßt man die erhaltene viskose Suspension in eine Mischung aus 600 ml Methanol und 50 ml Eisessig einlaufen. Das Copolymer scheidet sich als farbloser Feststoff ab, der abfiltriert, mit Wasser und Methanol gewaschen und im Vakuum bei 150°C getrocknet wird.

Man erhält 39,95 g (96,5 %) Copolymer mit einer reduzierten Viskosität von 60 ml/g. Das Produkt besitzt eine Glasübergangstemperatuir von 158°C und eine Schmelztemperatur von 308°C.

### Beispiel 7

### Co-Polykondensation von 2-Hydroxyphenyl-6-hydroxybenzthiazol mit 4,4'-Dichlordiphenylsulfon und 4,4'-Dihydroxydiphenylsulfon

6,082 g (25 mmol) 2-Hydroxyphenyl-6-hydroxy-benzthiazol, 25,025 g (100 mmol) 4,4'-Dihydroxydiphenylsulfon und 36 g wasserfreies Kaliumcarbonat werden in einer Mischung aus 200 ml N-Methylpyrrolidon und 80 ml Toluol an einem Wasserabscheider unter Stickstoff bei 140°C 30 Minuten gerührt. Man setzt 36,468 g (127 mmol) 4,4'-Dichlordiphenylsulfon zu und rührt weitere 4 Stunden bei 140°C. Anschließend wird Toluol abdestilliert, bis die Innentemperatur im Reaktionsgefäß 160°C beträgt. Bei dieser Temperatur wird noch 6 Stunden gerührt. Nach dem Erkalten läßt man die erhaltene viskose Suspension in eine Mischung aus 600 ml Methanol und 50 ml Eisessig einlaufen. Das Co-Polymer scheidet sich als farbloser Feststoff ab, der abfiltriert, mit Wasser und Methanol gewaschen und im Vakuum bei 100°C getrocknet wird.

Man erhält 57,2 g (99 %) Copolymer mit einer reduzierten Viskosität von 69 ml/g. Das Produkt besitzt eine Glasübergangstemperatur von 220°C.

## Patentansprüche

1. Löslicher und/oder schmelzbarer benzthiazolhaltiger Polyarylether mit einer Glasübergangstemperatur oberhalb von 150°C und einer Schmelztemperatur von bis zu 450°C, aufgebaut im wesentlichen aus wiederkehrenden Einheiten der allgemeinen Formel I 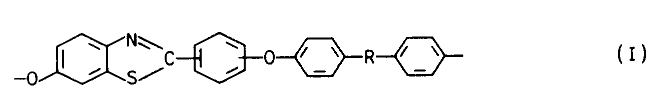 deren Kerne substituiert sein können durch C₁-C₆-Alkyl, C₁-C₆-Alkoxy, Aryl oder Halogen, wobei R steht für
-CO- ; -SO₂- ;

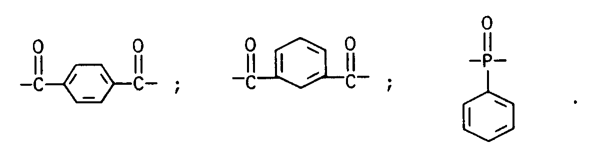

2. Polyarylether nach Anspruch 1 aus
1 bis 100 Mol.-% Einheiten der allgemeinen Formel I und
bis 99 Mol.% wiederkehrenden Einheiten der allgemeinen Formel II 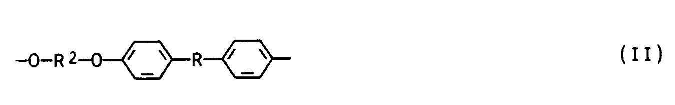 wobei R die in Anspruch 1 angegebene Bedeutung hat und R² steht für

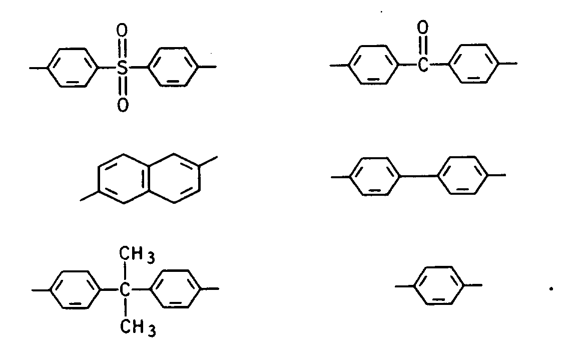

3. Polyarylether nach Anspruch 1, im wesentlichen aufgebaut aus wiederkehrenden Einheiten der besonderen Formel III

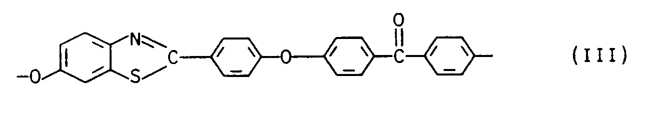

4. Polyarylether nach Anspruch 1, im wesentlichen aufgebaut aus wiederkehrenden Einheiten der besonderen Formel IV

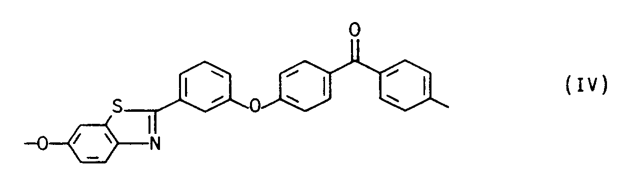

5. Polymer nach einem der Ansprüche 3 oder 4, das anstelle von 1 bis 99 % der Einheiten Va bzw. Vb 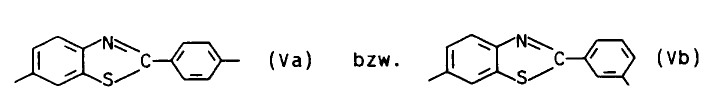 jeweils Einheiten enthält ausgewählt aus

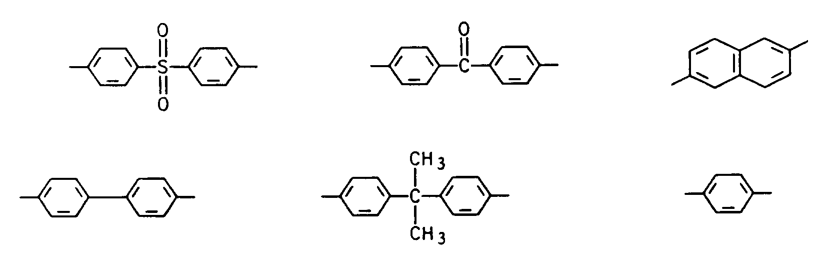

6. Bisphenol der Struktur VI

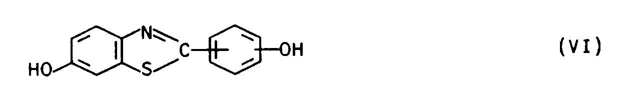

7. Verfahren zur Herstellung der Polymeren nach Anspruch 1 bis 4, dadurch gekennzeichnet, daß ein Bisphenol der Formel VI, oder Mischungen eines Bisphenols der Formel VI mit bis zu 99 % mol-%, bezogen auf die Mischungen, an Bisphenolen der Formel HO-R²-OH, wobei R² die in Anspruch 2 angegebene Bedeutung hat, mit einer entsprechenden aktivierten aromatischen Dihalogen- oder Dinitroverbindung in einem polaren, aprotischen Lösungsmittel polykondensiert wird, wobei die Reaktionstemperatur je nach Reaktionspartnern und gewähltem Lösungsmittel zwischen 140 und 320° C liegt.

8. Verfahren nach Anspruch 7, dadurch gekennzeichnet, daß die Polykondensation in Gegenwart einer Base aus der Gruppe der Alkalimetall- oder Erdalkalimetallcarbonate durchgeführt wird.

## Claims

1. A soluble or meltable benzothiazole-containing polyaryl ether having a glass transition temperature of above 150°C and a melting point of up to 450°C, composed essentially of repeat units of the formula I 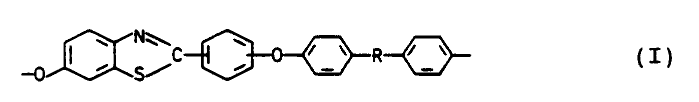 whose rings may be substituted by C₁-C₆-alkyl, C₁-C₆-alkoxy, aryl or halogen and in which R is
-CO- ; -SO₂- ;

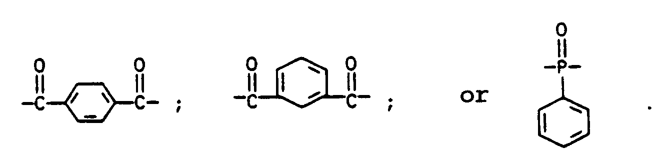

2. A polyaryl ether as claimed in claim 1, composed of
from 1 to 100 mol% of units of the formula I and
up to 99 mol% of repeat units of the formula II 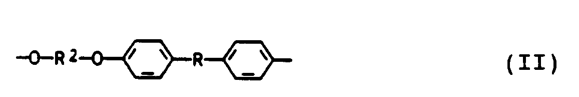 where R is as defined in claim 1 and R² is

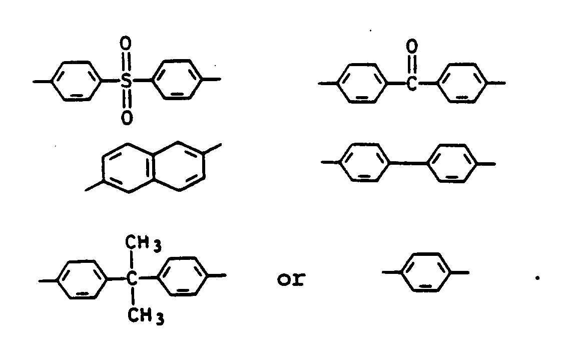

3. A polyaryl ether as claimed in claim 1, composed essentially of repeat units of the formula III

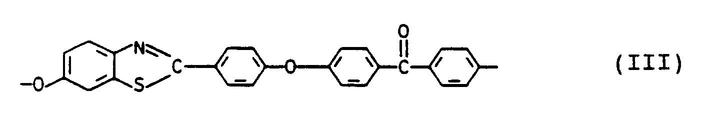

4. A polyaryl ether as claimed in claim 1, composed essentially of repeat units of the formula IV

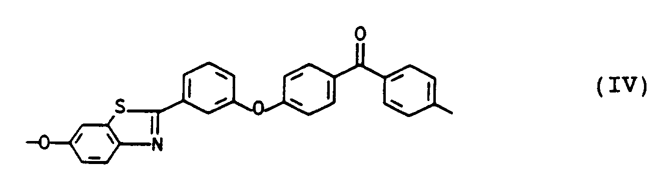

5. A polymer as claimed in either of claims 3 and 4 which instead of from 1 to 99% of units Va or Vb 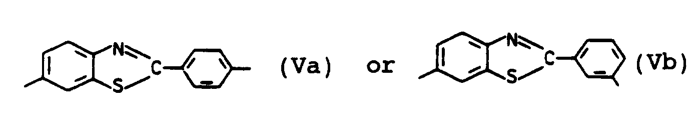 contains in either case units selected from

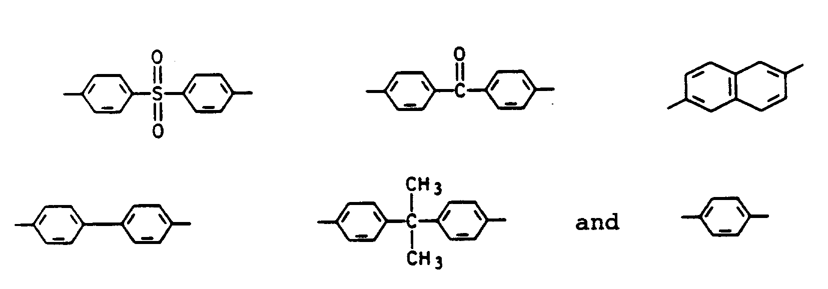

6. A bisphenol of the structure VI

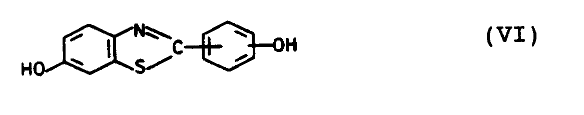

7. A process for preparing a polymer as claimed in claim 1 or 2 or 3 or 4, which comprises polycondensing a bisphenol of the formula VI or a mixture of a bisphenol of the formula VI with up to 99 mol%, based on the mixture, of a bisphenol of the formula HO-R²-OH, where R² is as defined in claim 2, with a corresponding activated aromatic dihalo or dinitro compound in a polar aprotic solvent at a temperature which varies with the reactants and the solvent used and is within the range from 140 to 320°C.

8. A process as claimed in claim 7, wherein the polycondensation is carried out in the presence of a base selected from the group consisting of the alkali metal and alkaline earth metal carbonates.

## Revendications

1. Polyaryléthers contenant des groupements benzothiazole, solubles et/ou fusibles, ayant une température de transition vitreuse supérieure à 150°C et une température de fusion qui peut atteindre 450°C, composés essentiellement de motifs répétitifs de formule générale I 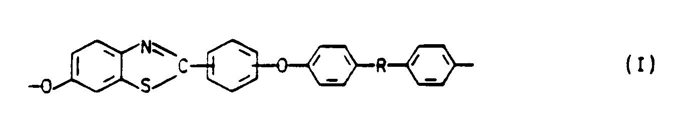 dont les noyaux peuvent être substitués par des restes alkyle en C₁-C₆, alcoxy en C₁-C₆, aryle ou par des atomes d'halogène, R étant mis pour
-CO- ; -SO₂- ;

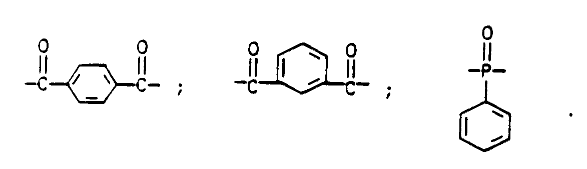

2. Polyaryléthers selon la revendication 1, composés
de 1 a 100% en moles de motifs de formule générale I et
de 99% en moles au maximum de motifs répétitifs de formule générale II 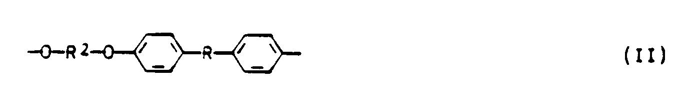 R ayant la signification donnée dans la revendication 1 et R² étant mis pour

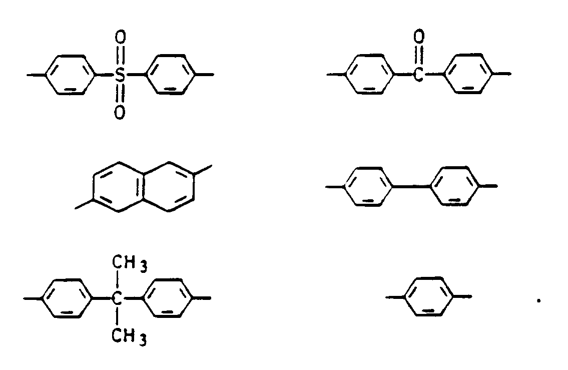

3. Polyaryléthers selon la revendication 1, composés essentiellement de motifs répétitifs de formule particulière III

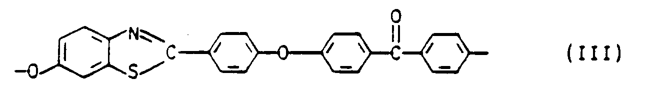

4. Polyaryléthers selon la revendication 1, composés essentiellement de motifs repetitifs de formule particulière IV

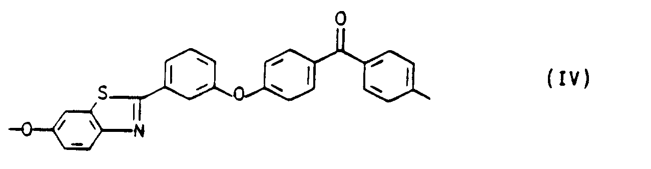

5. Polymere selon la revendication 3 ou 4 qui contient, à la place de 1 à 99% de chacun des motifs Va ou Vb 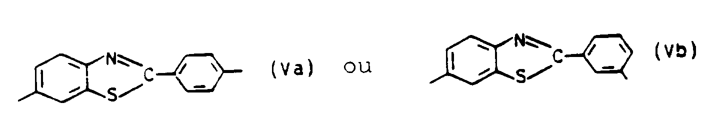 des motifs choisis parmi

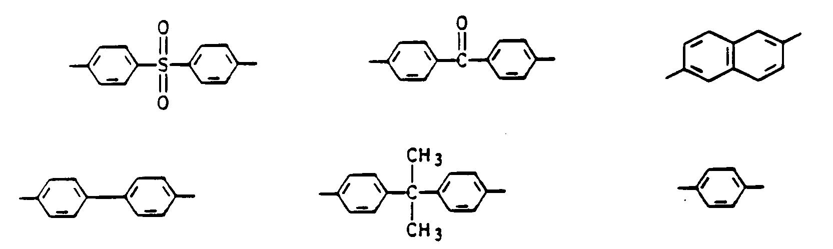

6. Bisphénol de structure VI

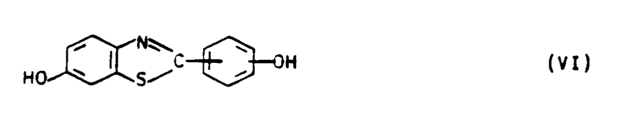

7. Procédé de préparation des polymères selon l'une quelconque des revendications 1 a 4, caractérisé en ce qu'un bisphénol de formule VI ou des mélanges d'un bisphénol de formule VI avec jusqu'à 99% en moles, par rapport aux mélanges, de bisphénols de formule HO-R²-OH, R² ayant la signification donnée dans la revendication 2, est polycondense, dans un solvant aprotique polaire, avec un composé aromatique dihalogéné ou dinitré convenablement activé, la température de réaction se situant entre 140 et 320°C selon les partenaires réactionnels et le solvant choisi.

8. Procédé selon la revendication 7, caractérisé en ce que la polycondensation est conduite en présence d'une base du groupe des carbonates de métaux alcalins et de métaux alcalino-terreux.
